# EUROPEAN PATENT SPECIFICATION

(11) **EP 3 464 959 B1**
(45) Date of publication and mention of the grant of the patent: **10.03.2021**
(21) Application number: 16728286.2
(22) Date of filing: 06.06.2016
(51) Int. Cl.: F16H 63/34, F16H 57/00, F16H 63/18

(54) **PARK LOCK SYSTEM, TRANSMISSION COMPRISING SUCH A PARK LOCK SYSTEM, METHOD FOR ASSEMBLING SUCH A PARK LOCK SYSTEM INTO A TRANSMISSION.**
PARKSPERRSYSTEM, GETRIEBE MIT SOLCH EINEM PARKSPERRSYSTEM, VERFAHREN ZUR MONTAGE SOLCH EINES PARKSPERRSYSTEMS IN EINEM GETRIEBE
SYSTÈME DE VERROUILLAGE DE STATIONNEMENT, TRANSMISSION COMPRENANT UN TEL SYSTÈME DE VERROUILLAGE DE STATIONNEMENT, PROCÉDÉ D'ASSEMBLAGE D'UN TEL SYSTÈME DE VERROUILLAGE DE STATIONNEMENT DANS UNE TRANSMISSION

(43) Date of publication of application: 10.04.2019
(73) Proprietor: Punch Powertrain N.V., 3800 Sint-Truiden (BE)
(72) Inventor: VAN LIEMPT, Wouter, 3800 Sint-Truiden (BE); MEEUWISSEN, Wim, 3800 Sint-Truiden (BE)
(74) Representative: V.O.
(86) International application number: PCT/EP2016/062811
(87) International publication number: WO 2017/211386

(56) References cited:
- EP-A1- 2 275 719
- EP-A1- 2 916 045
- DE-A1-102004 037 982
- DE-A1-102008 011 115
- DE-A1-102009 004 263
- DE-A1-102010 061 171
- DE-A1-102014 000 772
- JP-A- H08 216 842
- JP-A- 2013 127 264
- US-B1- 6 725 962

## Description

The invention relates to a park lock system for a transmission.

Park lock systems are well known and typically engage with a park gear to lock or unlock a secondary shaft of a transmission. The park lock system usually comprises a park lock pawl that is arranged for engagement with the park gear. The park lock pawl is actuated by an actuation device. The actuation device may be mechanical, electrical or hydraulic. Many variants are possible, for example a shift fork coupled to a shift drum.

The transmission can be any type of transmission, such as manual a transmission, e.g.embodied as for example a gear transmission, or an automatic transmission, e.g. embodied as for example but not limited to a continuously variable transmission or a dual clutch transmission, etc.

The park lock system typically comprises multiple components, such as the park lock pawl, or a return spring. Also the actuation device, may comprise multiple and/or complex components, which may depend on the type of actuation device used. Assembling the park lock system to the transmission, for example to the shift drum of the transmission, is often done at a relatively late stage of the transmission assembly. Depending on the transmission design, there may be relatively limited space available for the park lock system to fit in. Also, it can be relatively complex to assemble the multiple components into the relatively limited space available. This may be time consuming, may result in mistakes and may impede reproducibility and/or reliability of the assembly.

Document DE 102004037982 discloses a park lock system of which the park lock pawl, the shaft, the return spring, the actuation element etc. are mounted in an autonomous functioning building unit.

Document DE 102008011115 discloses a park lock system comprising a housing wherein the park shaft is received through a hole of the housing and wherein the park lock pawl is rotatably engaged to the park shaft extending through the hole of the housing.

So, there is a need for an improved park lock system which may facilitate assembly, which may save time and/or which may provide for a more reproducible and/or reliable assembly.

An object of the invention is to provide for an improved park lock system which obviates at least one of the above mentioned drawbacks. Preferably, the functionality and/or advantages of the park lock system may be maintained.

It is also an object of the present invention to provide an easy way of assembling such a park lock system into a transmission housing.

The objects are solved by a park lock system according to claim 1 and a method for assembling such a park lock system into a transmission housing according to claim 10.

Thereto, there is provided a park lock system comprising a park lock pawl that is adjustable between a park position in which the park lock pawl is engaged with a park gear and a non-park position in which the park lock pawl is disengaged from the park gear, an actuation device for actuating the park lock pawl between the park position and the non-park position, a mounting bracket that is configured for receiving the park lock pawl and for receiving the actuation device such that, when the park lock pawl and the actuation device are mounted to the mounting bracket, a pre-assembly unit is provided for assembly into a transmission housing, wherein the mounting bracket further is provided with connection elements for connection to the transmission housing.

By providing a mounting bracket to which the components of the park lock system can be mounted, a pre-assembly unit can be provided. The pre-assembly unit can be assembled in parallel and independent of the assembly of the transmission. At a late stage of the transmission assembly, the pre-assembled park lock system can then be mounted to the transmission. Often, the assembly of the park lock system is the last stage or one of the last stages of the transmission assembly before closing the transmission house.

By providing a mounting bracket according to the invention, the park lock system is then pre-assembled, and can, as a single pre-assembled unit, be assembled to the transmission prior to closing the transmission housing. As such, the assembly time of the transmission may be reduced. Also, by pre-assembling the park lock system, preferably on a separate and independent assembly line, mistakes and/or failures may be reduced as the separate assembly line may have its own procedures and/or quality control. , the reliability and/or reproducibility of the assembly of the park lock unit to the transmission may be improved.

Advantageously, the park lock pawl and the actuation device may be mounted on the same park shaft that is mounted to the mounting bracket. By providing such a park shaft that can receive both the park lock pawl as the actuation device, the complexity of the park lock unit may be reduced by limiting the number of components used.

The mounting bracket further comprises at least a first bracket plate and a second bracket plate parallel to the first bracket plate, wherein the park lock pawl is receivable between the first bracket plate and the second bracket plate. By providing at least two approximately parallel bracket plates, the park lock pawl can be received between the bracket plates. As such, the bracket plates may, at least partially, provide for alignment and/or guidance of the park lock pawl.

The park shaft is mounted in holes through the bracket plates and extends there trough. The park shaft is sufficiently long such that it extends outside of the bracket plates at both ends. At one end, a connecting element can be provided for connection to the transmission housing. At the other end, the actuation device may be mounted to the park shaft. So, a compact unit can be obtained that is mountable to the transmission housing. Further connecting elements can be provided to the mounting bracket for facilitating mounting of the bracket to the transmission housing. For example, a connecting element can be provided on a pin extending through the bracket. The pin may thus connect the bracket plates and may provide for connection to the transmission housing.

Advantageously, the park lock pawl is actuatable via a shift fork that is at one end engageable in a shift drum and at the other end arranged for engaging the park lock pawl. By providing a shift fork that is engageable to the shift drum, a compact actuation device for the actuation of the park lock pawl is obtained.

The invention further relates to a transmission comprising such a park lock system.

Further advantageous embodiments are represented in the subclaims. The invention will further be elucidated on the basis of exemplary embodiments which are represented in a drawing. The exemplary embodiments are given by way of non-limitative illustration.

In the drawing:
Fig. 1 shows a perspective side view of a park lock system according to an embodiment of the invention;
Fig. 2 shows an exploded view of the park lock system of figure 1;
Fig. 3 shows a perspective side view of the park lock system according to the invention including park gear and shift drum
Fig.4a shows a side view of figure 3
Fig. 4b shows cross section view of figure 4a;
Fig. 5a shows a side view of embodiment of figure 3 in an non-park position;
Fig. 5b shows a top view of an embodiment of figure 3 in an non-park position;
Fig. 6a shows a side view of an embodiment of figure 3 in an tooth to tooth position;
Fig. 6b shows a top view of an embodiment of figure 3 in an tooth to tooth position;
Fig. 7a shows a side view of an embodiment of figure 3 in a park position;
Fig. 7b shows a top view of an embodiment of figure 3 in a park position;
Fig. 8 shows a perspective top view of a mounting bracket according to the invention
Fig. 9 shows an exploded perspective view of securing the park lock unit to the transmission housing part from outside of the transmission housing.

It is noted that the figures are only schematic representations of embodiments of the invention that are given by way of non-limiting example. In the figures, the same or corresponding parts are designated with the same reference numerals.

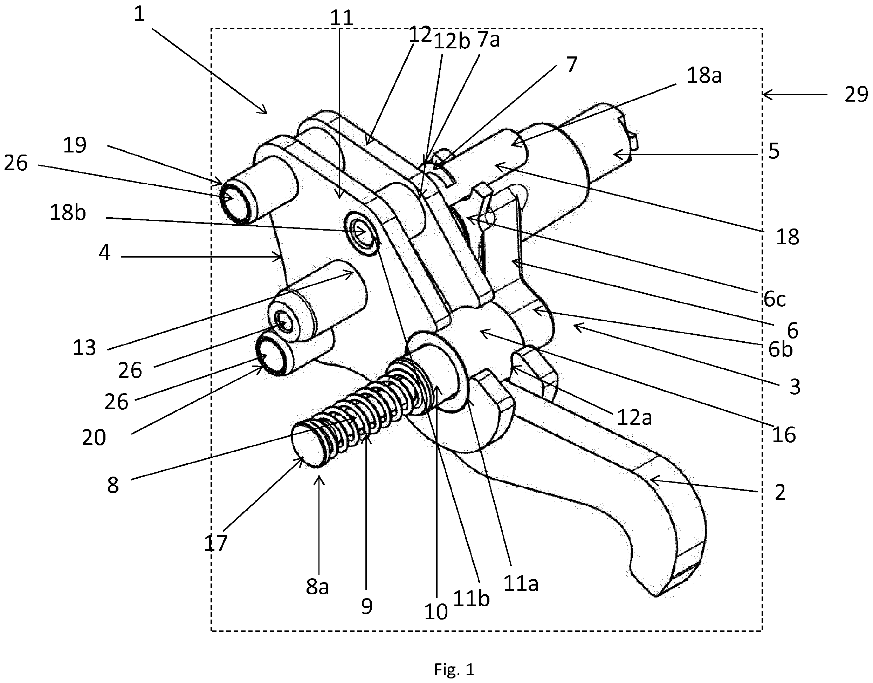

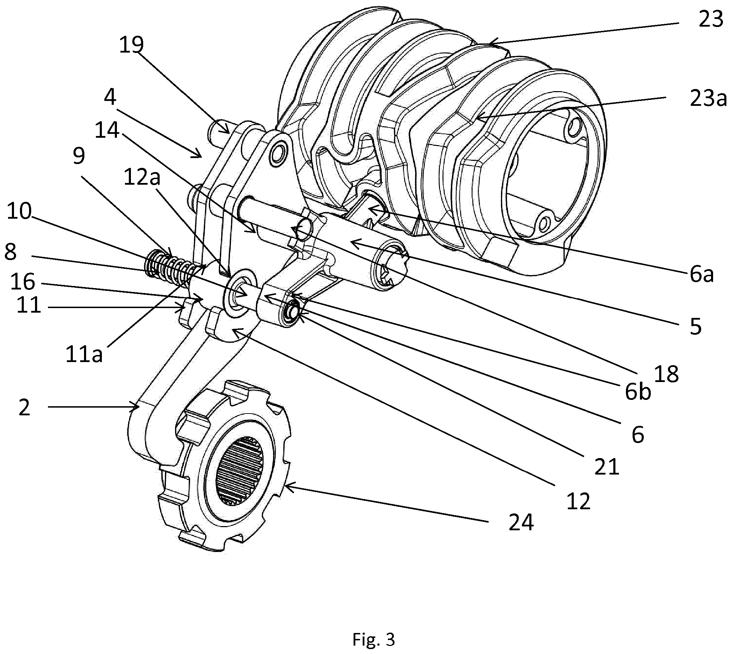

Figure 1 shows a perspective side view of a park lock system 1 according to the invention. Said park lock system 1 comprises at least a park lock pawl 2, an actuation device 3 and a mounting bracket 4. Said park lock pawl 2 may be adjustable and may be actuated by the actuation device 3 between a park position and a non-park position. In the park position, the park lock pawl 2 is engaged with a park gear 24. In the non-park position, the park lock pawl 2 is disengaged from the park gear 24. The park gear 24 is not shown in figure 1, but is e.g. shown in figure 3.

The actuation device 3 may comprise components to actuate the park pawl 2, which may comprise, as shown in figure 1, a park shaft 5, a shift fork 6, a return spring 7, a pull rod 8, a compressions spring 9 and a locking cone 10. More or less components may be provided depending on the park lock system requirements. The shift fork 6 is at one end 6a engageable to a shift drum 23 (see e.g. figure 3) and is at an other end 6b engageable to the park lock pawl 6b. In this embodiment, the shift fork 6 is engageable at end 6b to the park lock pawl 2 via the pull rod 8 and the locking cone 10. Other actuation devices may be possible.

Advantageously, said mounting bracket 4 comprises a first mounting bracket plate 11 and a second mounting bracket plate 12, wherein the first and second mounting bracket plates 11, 12 are arranged substantially in parallel. However, the mounting bracket 4 may comprise more or less than two mounting bracket plates 11, 12 and/or other mechanical features, such as but not limited to plates, ribs, pins, protrudings and holes, depending on the construction of the park lock system 1 and in particular the actuation device 3. The park lock pawl 2 is receivable between the first mounting bracket plate 11 and the second mounting bracket plate 12. Advantageously, the park lock pawl 2 is hingedly mounted onto the park shaft 5, and between the mounting bracket plates 11, 12. So, the movement of the park lock pawl 2 in a direction transverse to the mounting bracket plates 11, 12, is blocked, and, the park lock pawl 2 is hingedly movable with respect to the park shaft 5.

The actuation device 3 comprises a shift fork 6 which may be slidably and/or rotatably connected to a park shaft 5. The park shaft 5 extends outwardly from the second mounting bracket plate 12 and the shift fork 6 is movable in axial direction towards or away from the second mounting bracket 4 over the park shaft 5. Said park shaft 5 is received through holes 13, 14 of the first mounting bracket plate 11 and second mounting bracket plate 12 respectively of the mounting bracket 4. One end of the park shaft 5 comprises a connecting element 26, such as but not limited to screw thread inside or on the outside of the park shaft 5, which enables to secure the park shaft 5 to the transmission housing 15 with a corresponding connecting element 27, such as but not limited to a bolt 5'.

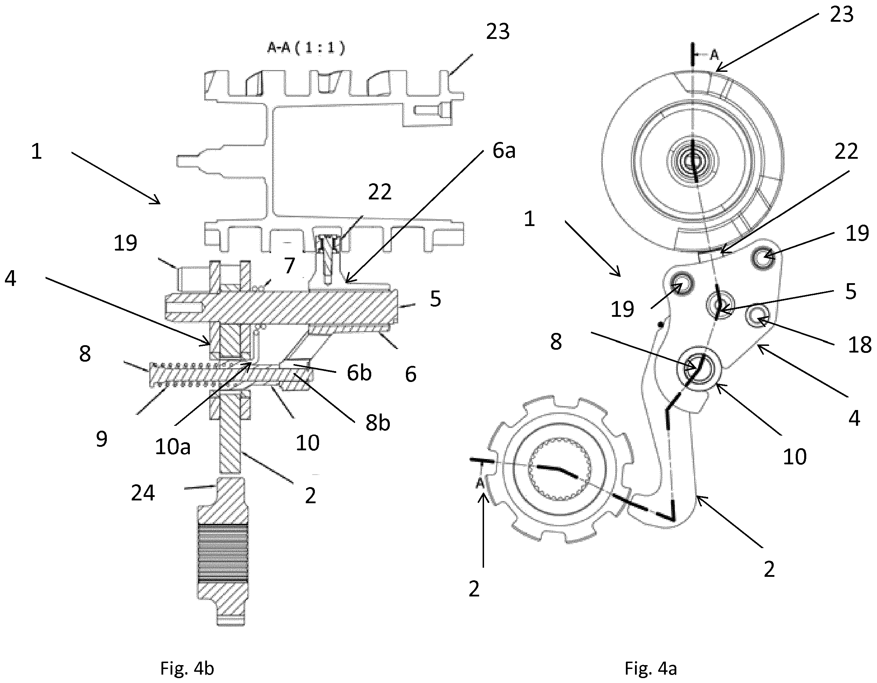

Advantageously, the shift fork 6 may be fixed at its end 6b to a pull rod 8 to move the pull rod 8 towards or away from the second mounting bracket plate 12. The pull rod 8 is here mountable through holes 11a, 12a in the first and second bracket plates 11, 12 respectively. However, the pull rod 8 may also be mountable through a bushing 16 that is fixed to the mounting bracket, or the bushing 16 may be mountable in the holes 11a, 12a. Further, the pull rod 8 is provided with a locking cone 10 that is movable with respect to the pull rod 8 and abuts to the end 6b of the shift fork 6, see e.g. figure 4b. Between an end 8a of the pull rod 8 and the locking cone 10, the compression spring 9 is provided. The locking cone 10 cooperates with the park lock pawl 2, such that when moving the locking cone 10 along the pull rod 8, the park lock pawl 2 is moved, i.e. rotated about the park shaft 5. The locking cone 10 is arranged for cooperation with the park lock pawl 2 at an end 10a. At that end, the locking cone 10 is provided with a cone-shaped part 10a. This cone-shaped part 10a cooperates with the park lock pawl 2. At an opposite end 10b, the locking cone 10 abuts to the shift fork 6. The diameter of the cone-shaped part 10a increases towards an end of the cone-shaped part 10a and decreases towards the shift fork 6.

The locking cone 10 may be adjustably or slidably connected to the pull rod 9 and adjustably or slidably received in a bushing 16 of the mounting bracket 4. The bushing 16 may be a separate part or an integrated part of the mounting bracket 4. Advantageously, the bushing 16 is provided to guide the pull rod 8 with respect the mounting bracket 4. To allow cooperation of the locking cone 10 with the park lock pawl 2, for actuating the park lock pawl 2, the bushing 16 preferably comprises one or more recesses or apertures through which the locking cone 10 and the park lock pawl 2 can contact. Preferably one bushing recess 25 is provided through which the locking cone 10, in particular the cone-shaped part 10a, may be engaged to the park pawl 2.

Alternatively, the bushing 16 may be embodied as one or more plates, ribs or of another construction in order to guide the locking cone 10 arranged at the pull rod 8. The locking cone 10 may push the park lock pawl 2 in a park position when the pull rod 8 slides towards the second mounting bracket plate 12 and in a non-park position when the pull rod 8 slides away from the second mounting bracket plate 12.

A compression spring 9 may be connected to the pull rod 8 and extends between the locking cone 10 and a spring blocking element 17 at the end 8a of the pull rod 8. The compression spring 9 may exert a force towards the locking cone 10 when the pull rod 8 is moved or is positioned away from the mounting bracket 4 by the shift fork 6. Then the compression spring 9 pushes the locking cone 10 towards the shift fork 6., Subsequently, the cone shaped part 10a of the locking cone 10 engages the park pawl 2 to the park position. The compression spring 9 may exert a force away the locking cone 10 when the pull rod 8 is moved or is positioned towards to the mounting bracket 4 by the shift fork 6. Then the compression spring 9 pulls the locking cone 10 away from the shift fork 6, wherein subsequently said the cone shaped part 10a of locking cone 10 disengages the park pawl 2 to the non-park position Said compression spring 9 may also be embodied as a hydraulic, electrical or another mechanical spring or bias element. Said spring blocking element 17 may alternatively be for example a rim, one or more protrudings, one or more grooves or holes to keep the compression spring 9 in position.

The mounting bracket 4 further comprises, in this embodiment, a guidance rod 18 extending through holes 11b, 12b of the first and the second bracket plates 11, 12. The guidance rod 18 here extends at one side 18a outwardly from the second bracket plate 12 and may be provided for rotational locking of the shift fork 6. To that end, the shift fork 6 is provided with a seat 6c in which the guidance rod 18 fits, thus providing for rotational locking of the shift fork 6 around the park shaft 5 and only allowing for translational movement along the park shaft 5.

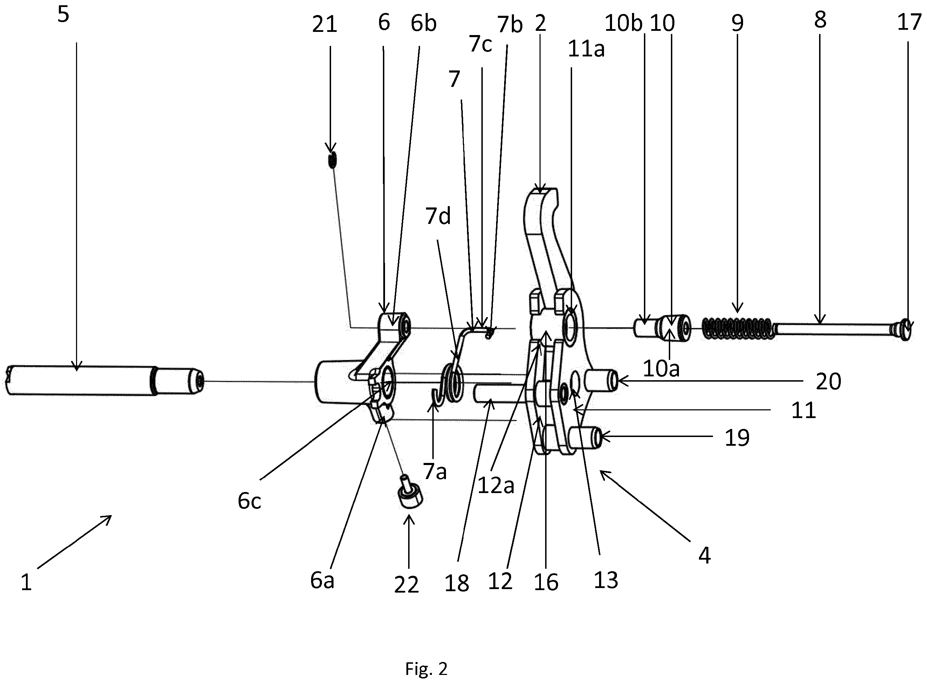

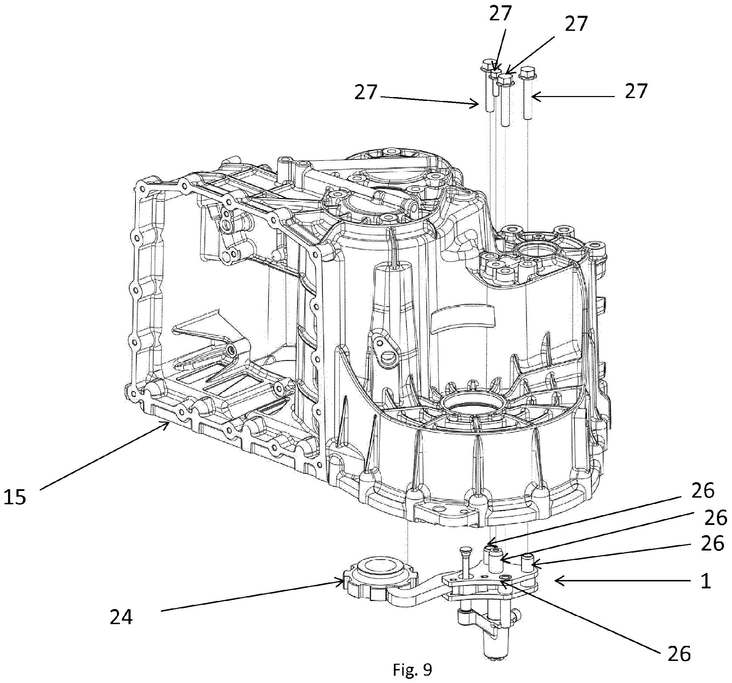

The guidance rod 18 is on the other side 18b fixed through the first and second bracket plate 11, 12. The guidance rod 18 comprises at its end 18b a connecting element 26, such as but not limited to screw thread on the inside and/or outside at the end of the guidance rod 18, for securing the guidance rod 18 to the transmission housing 15 with a corresponding connection element 27, such as but not limited to a bolt, as can be seen in figure 9. The return spring 7 is mounted to the guidance rod 18 at one end 7a, goes around the park shaft 5 with the other end 7b in the bushing 16 connected with the park lock pawl 2 fixed to the mounting bracket 4. In park-position the return spring 7 is positioned between the locking cone 10 and park pawl 2. Said return spring 7 is provided as a bias to keep the park lock pawl 2 in a non-park position, to prevent the park pawl 2 from rattling in a tooth-to-tooth position of the park pawl 2 with the gear 24 and/or to prevent the park pawl 2 from engaging with the gear 24 during e.g. shocks of the vehicle when for example driving over a traffic bump. Due to the bias of the return spring, the return spring 7 may assist the shift fork 6 moving from the park position to the non-park position. The return spring 7 is shown in figure 1 and figure 2, and is, for simplicity reasons, not shown in figure 3.

Advantageously, said mounting bracket 4 is configured for receiving the park lock pawl 2 and for receiving the actuation device 3 such that, when the park lock pawl 2 and the actuation device 3 are mounted to the mounting bracket 4, a pre-assembly unit 29 is provided for assembly into a transmission housing 15, wherein the mounting bracket 4 further is provided with one or more connection elements for fixation to the transmission housing 15. Advantageously, the connection elements 26 may be embodied but not limited as internal or external screw thread or other connecting elements e.g. a hook or a finger or a ratchet etc.. The mounting bracket 4 may have more or less connection elements 26 depending on the park lock system 1 requirements.

Figure 2 shows an exploded view of the park lock system 1 of figure 1. A compact park lock system 1 may be obtained by arranging the park lock system 1 components in the mounting bracket 4 results in a compact design and which may reduce time and potential mistakes during assembly of the park lock system 1 in the transmission (see figure 9). Figure 2 further shows that a securing element, such as but not limited to a circlip 21, may be provided to fix the shift fork 6 and pull rod 8 together. End 6a of the shift fork 6 is provided with a guidance element 22 that may following into a track or cam or groove 23a of the shift drum 23. The guidance element 22 is here provided as a cam follower 22 that is rotatable mounted to the end 6a of the shift fork 6. This cam follower 22 may engaged to a groove 23a (shown in figure 3) of the shift drum 23.

Figure 3 shows a perspective side view of the park lock system 1 according to the invention including a park gear 24 and a shift drum 23. The shift drum 23 comprises grooves 23a which are provided to receive guiding elements, such as cam followers of shift forks, to enable shifting gears of a transmission (not shown) and/or moving the park lock system in a park or non-park position. The shift fork cam follower 22 of the shift fork 6 of the park lock system 1 may be engaged to a groove 23a of the shift drum 24, wherein the cam follower 22 follows the groove 23a that is provided for the actuation of the park lock system 1. The cam follower 22 follows the groove 23a during rotation of the drum 23 and consequently the shift fork 6 of the park lock system 1 may move in axial direction with respect to the shift drum 23, here along the park shaft 5, wherein eventually the park pawl 2 is moved in a park or non-park position. The shift drum 23 may be actuated electrically, hydraulically or mechanically. However, other manual, hydraulically or electronically controlled devices or systems may be possible to move the shift fork 6 and eventually the park pawl 2 in a park or non-park position.

Figure 4a shows a side view of figure 3 and figure 4b shows a cross section view of figure 4a along the line A-A. A compact park lock system 1 is achieved by mounting all essential parking lock system 1 components in one mounting bracket 4. The cam follower 22 follows cam or groove 23a of the shift drum 23. When rotating the shift drum 23, due to the geometrical arrangement of the cam (not shown) on the shift drum 23, the cam follower 22 moves axially with respect to the shift drum 23. In mounted situation, the park shaft 5 is arranged approximately parallel to the shift drum 23, so an axial movement of the cam follower 22 of the shift fork 6 provides for a translational movement of the shift fork 6 along the park shaft 5. Since the shift fork 6 is fixedly mounted to end 8b of the pull rod 8, the pull rod 8 is moved axially, in a direction approximately parallel to the park shaft 5, transverse to the mounting bracket plates 11, 12. Due to this movement of the pull rod 8, the cone-shaped part 10a of the locking cone 10 moves as well. Due to the movement of the cone-shaped part 10 that cooperates with the locking pawl 2, the locking pawl is hingedly moved around the park shaft 5 between the park position and the non-park position. When confronted with an increasing diameter of the cone-shaped part 10a, the park lock pawl 2 may move to a park position, i.e. when the cone-shaped part 10a moves towards the shift fork 6. When confronted with a decreasing diameter of the cone-shaped part 10a, i.e. when the cone-shaped part 10a moves away from the shift fork 6, the park lock pawl 2 may move to a non-park position.

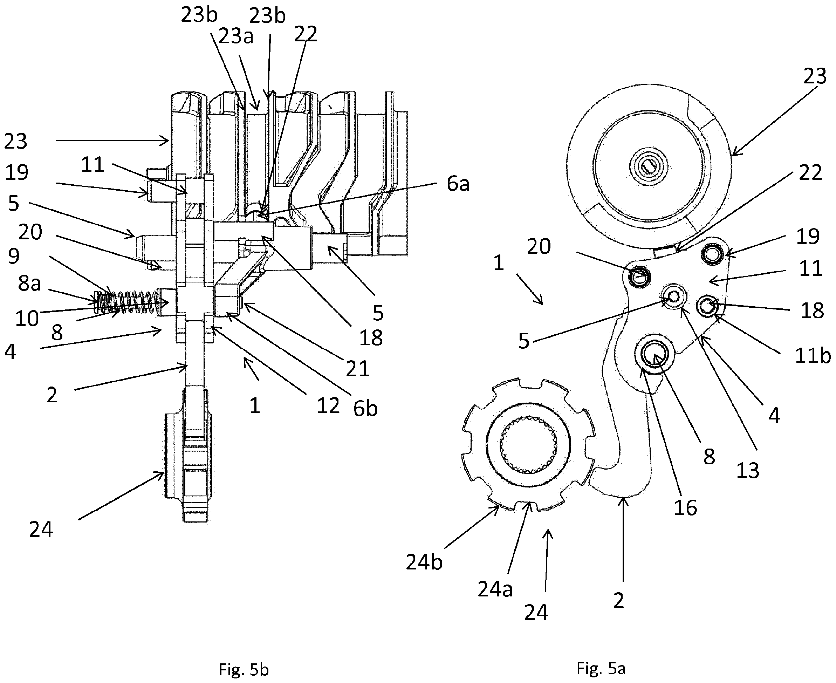

Figures 5-7 show the different positions of the park lock system 1. Figure 5a shows a side view and figure 5b a top view of an embodiment of figure 3, wherein the park lock system is in a non-park position. In a non-park position the park pawl 2 is positioned away from the park gear 24 and does not contact the park gear 24, wherein a bias of the return spring 7 prevents the park pawl 2 from unintentionally engaging in the park gear 24 and prevents rattling during for example driving over a traffic bump. In the non-park position the shift fork may be positioned towards the mounting bracket 4, the compression spring 9 may partially or completely released and the narrow side of cone shaped part 10a of the locking cone 10 may be positioned inside the bushing 16.

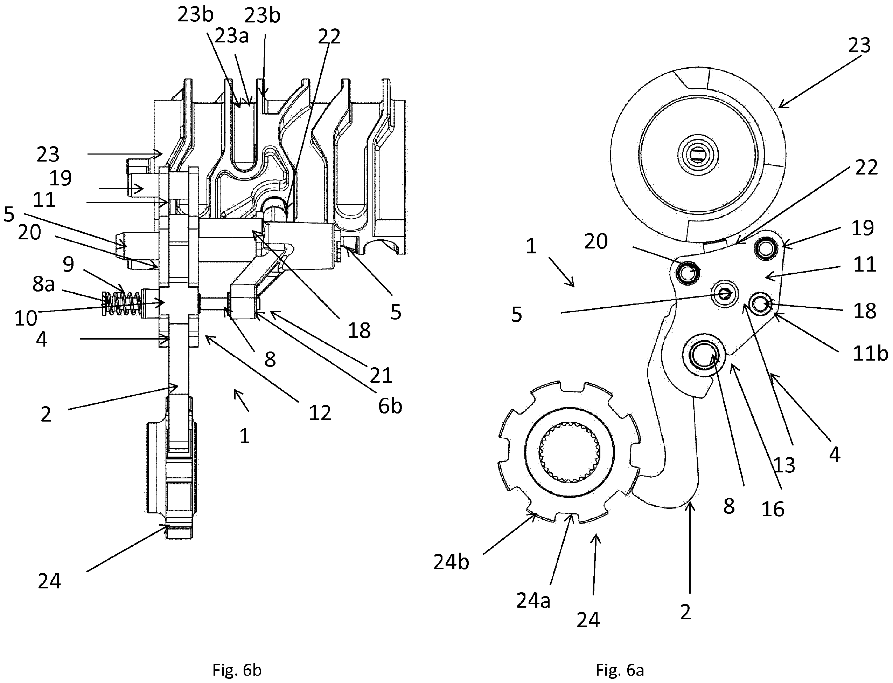

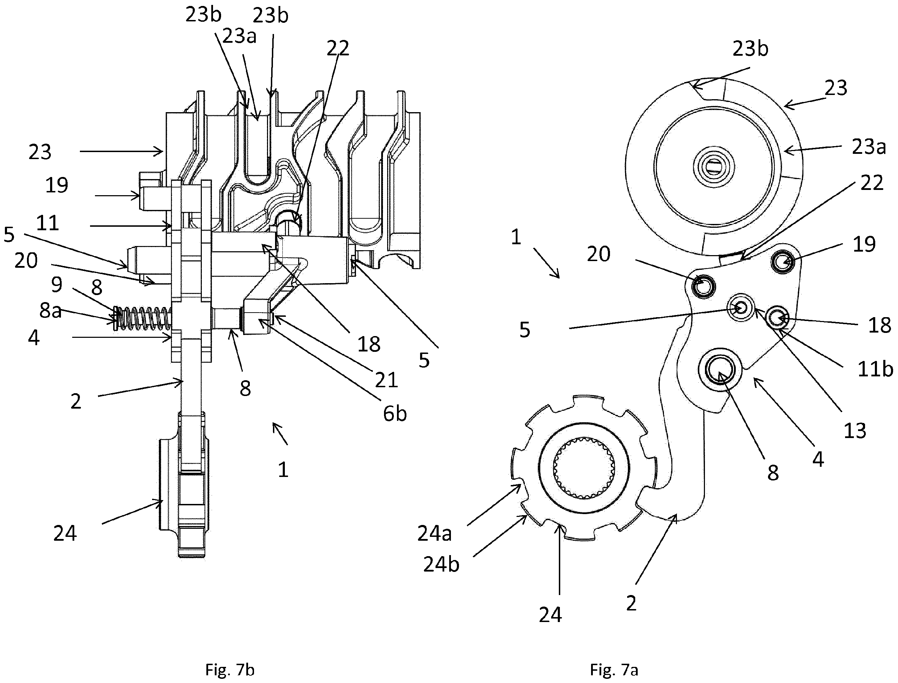

To achieve the park position as shown in figure 7a and figure 7b, the shift drum 23 rotates and the cam follower 22 follows the groove 23a, wherein the cam follower 22 makes an axial movement in respect to the shift drum 23 and consequently moving away from the mounting bracket 4. Said cam follower 22 may be rotatable connected to the shift fork end 6a which may rotate due to contact with the upstanding edges 23b of the shift drum groove 23a when rotating the shift drum. The axial movement of the cam follower 22 of the shift fork 6 provides a translational movement of the shift fork 6 along the park shaft 5, wherein the park shaft 5 is received through the shift fork hole 6c and holes 13, 14 of the first mounting bracket plate 11 and second mounting bracket plate 12. The shift fork end 6b is fixedly mounted to end 8b of the pull rod 8 which simultaneously moves the pull rod 8 axially in a direction approximately parallel to the park shaft 5, transverse to the mounting bracket plates 11, 12. Due to this movement of the pull rod 8, the locking cone 10 moves as towards the mounting bracket 4 and cooperates with the locking pawl 2, which is hingedly moved around the park shaft 5 between the park position and the non-park position. When the park pawl 2 is confronted with an increasing diameter of the cone-shaped part 10a, the park lock pawl 2 may move to a park position as shown in figures 7a or 7b or a tooth-to-tooth position as shown in figures 6a and 6b and a bias is build up in the compression spring 9.

Figure 6a shows a side view and figure 6b a top view of an embodiment of figure 3 in a tooth-to-tooth position. A tooth-to-tooth position may be achieved when the shift drum 23 rotates towards the park position while the park pawl 2 is engaged onto a park gear tooth 24b instead of being engaged in the park gear groove 24a, in other words between two park gear teeth 24b. To come from a non-park position to a park position, the shift drum 23 starts rotating and the cam follower 22 is guided in the shift drum grooves 23. The shift fork 6 is connected with the shift fork end 6a to the cam follower 22 and consequently moves in axial direction in respect of the shift drum 23. The shift fork 6 then translates along the park shaft 5 which is approximately parallel positioned in respect to the shift drum 23. One end 6b of the shift fork 6 is connected to the pull rod 8. So, the pull rod 8 translates in axial direction in parallel to the shift fork 6 when the shift fork 6 translates away from the mounting bracket 4. The shift fork 6 and pull rod 8 are then moved away from the mounting bracket 4. Due to this movement of the pull rod 8, the compression spring 9 builds up a bias on the locking cone 10 which pushes against the park pawl 2 towards the mounting bracket 4. When the park pawl 2 subsequently engages with a park gear tooth 24b the wide side of the cone shaped part 10a as shown in figure 4b of the locking cone 10 is not able to move far enough in the bushing 16 to push the park pawl in a groove. Consequently, a bias is build up in the compression spring 9 in order to keep the park pawl 2 pressed against the park gear tooth 24b. A tooth-to-tooth position is achieved. The park gear 24 may rotate in a tooth-to-tooth position till the park pawl 2 engages in a park gear groove 24a due to the bias of the compression spring 9. When the park pawl 2 is engaged in a park gear groove 24a, a park position is achieved as illustrated in figures 7a and 7b. The compression spring 9 may be partially or completely released in the park position, but may provide enough bias to prevent the park pawl 2 from unintentionally disengaging from the park gear groove 24a. Moreover, rattling at vehicle speeds below a certain threshold or unsafe situations may be prevented in a tooth-to-tooth position by the bias of the compression spring onto the locking cone 10 and keeping the park pawl 2 pressed onto the park gear tooth 24b Figure 7a shows a side view and figure 7b a top view of an embodiment of figure 3 in a park position. In the park position the park pawl 2 is engaged in the park gear groove 24a which prevents the a vehicle from moving when parked. In the park position the shift fork 6 may be positioned away from the mounting bracket 4, the compression spring 9 may partially or completely released and the portion of the locking cone 10, wherein the wide side may be positioned inside the bushing 16 and wherein the locking cone 10 presses the park pawl 2 in the park position. The park position is achieved by rotating the drum 23 from a non-park position or a tooth-to-tooth position. The cam follower 22, which is connected to the shift fork 6, moves through the shift drum groove 23a and moves the shift fork 6 in axial direction in respect to the shift drum 23 and away from the mounting bracket 4. The shift fork 6 translates along the park shaft 5, which is arranged approximately parallel to the shift drum 23. The other end 6b of the shift fork 6 is connected to the pull rod 8, which also moves in axial direction during translation of the shift fork 6. Subsequently, the distance between the end 8a of the pull rod 8 and the second mounting bracket 12 reduces during this axial movement of the pull rod 8. A bias is subsequently build up in the compression spring 9 which is mounted along the pull rod 8 between the pull rod 8a and the locking cone 10 at the side of the second mounting bracket plate 12. The bias pushes the locking cone 10 in the busing 16 and towards the first mounting bracket plate 11. The cone shaped part 10a of the locking cone 10 subsequently cooperates with the park pawl 2, wherein the wide side of the cone shaped part 10 pushes the park pawl 2 in a park gear groove 24a which results in a park position. When the park pawl is engaged onto the park tooth 24b in the tooth-to-tooth position as illustrated in figures 6a and 6b preventing the cone shaped part 10a of the locking cone 10 to move from the narrow side towards the wide side towards the second mounting bracket plate 12 to cooperate with the park pawl 2. The park gear 24 may rotate further until the park pawl 2 may be pressed in a park gear groove 24a.

To bring the park pawl 2 from a park position to a non-park position, the shift drum 23 starts rotating in reverse direction compared with the rotational direction for bringing the park lock pawl to a park position or a tooth-to-tooth position. The above described movement goes in reverse direction to the non-park position. A tooth-to-tooth position may not be achieved in this reverse operation, because the park pawl 2 only has to be disengaged to the non-park position. The cam follower 22 also moves subsequently in opposite direction through the shift drum grooves 23a when the shift drum 23 starts rotating. The shift fork 6 and pull rod 8 translate subsequently in axial direction in respect of the shift drum 23 and towards the mounting bracket 4. As result of this axial movement the pull rod 8 moves in axial direction towards the mounting bracket 4 and the locking cone 10 moves in axial direction along the pull rod 8 towards the pull rod end 8a. The compression spring 9, which is mounted along the pull rod 8 between the pull rod end 8a and locking cone 10, may stay partially or completely released.

The return spring 7 is mounted to the guidance rod 18 at one end 7a, goes around the park shaft 5 and is connected with the other end 7b to the bushing 16 and park lock pawl 2 fixed to the mounting bracket 4. Said return spring 7 provides a strongest bias to the park pawl 2 in a park position and helps to return the park lock pawl 2 to a non-park position. In a non-park position the return spring 7 still provides a bias which helps to keep the park pawl 2 in the non-park position and prevents the park pawl 2 from rattling or unintentionally engaging with the park gear 24.

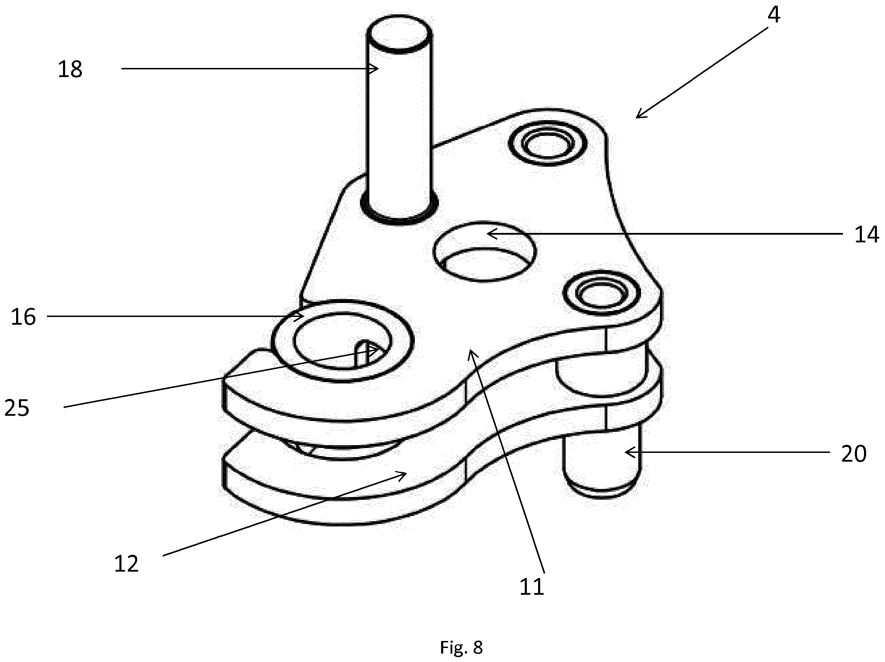

Figure 8 shows a perspective top view of a mounting bracket 4 according to the invention. Preferably, the mounting bracket 4 may consist of one integrated component. However, the mounting bracket 4 may also comprise two or more components. In a preferred embodiment the mounting bracket 4 is made of a metal material, but other materials may be possible such as but not limited to plastic or reinforced materials. The mounting bracket 4 preferably comprises the guidance rod 18, one or more mounting pins and/or the bushing 16. To this mounting bracket 4 the other components are then assembled to provide the pre-assembly unit 29 as shown in figure 1.

Advantageously, the mounting bracket 4 may comprise one or more mounting bracket plates and preferably two bracket plates 11,12 arranged in parallel, wherein components may be connected, such as but not limited to the park pawl 2, the between and/or to the mounting bracket plates 11,12. The mounting bracket 4 further comprises holes in the first and second mounting bracket plate 11,12 to receive the park shaft 5, wherein the park shaft 5 preferably forms one integrated part of the mounting bracket 4. A bushing 16 is provided to receive a locking cone 10, wherein the bushing 16 may have one or more apertures or recesses which enables the locking cone 10 to engage with the park pawl 2. The guidance rod 18 is provided to rotational lock the shift fork 6 and forms preferably an integrated part of the mounting bracket 4. The guidance rod 18 is connected to the first and second bracket plate 11,12 and extends at one side outward from the second mounting bracket plate 12. The other end of the guidance rod 18 is provide with connecting elements, such as but not limited to screw thread. One or more and preferably two additional connecting elements are provided on the first bracket plate 11, wherein the additional connecting elements are preferably but not limited to pins 19, 20 extending outward form the first mounting bracket plate 11, wherein the pins 19, 20 may preferably have a cylindrical shape and provided with screw thread on the inside or outside of the pins 19,20.

Figure 9 shows an exploded perspective view of assembling the park lock system 1 to the transmission housing 15, wherein the park lock park lock system 1 may be pre-assembled as the pre-assembly unit 29 as shown in figure 1. Before closing the transmission housing 15, the pre-assembly unit 29 is inserted into the transmission in a way that the connecting elements 26 are aligned with holes 28 in the transmission housing through which corresponding connecting elements 27 can be inserted that fix the pre-assembly unit 29 to the transmission housing 15. The park lock system 1 is preferably assembled as one unit to the transmission, wherein the transmission and park lock system 1 may be assembled on top of a first transmission housing (not shown).The transmission is typically provided in a transmission housing that may comprise a first transmission housing part and a second transmission housing part. The first transmission housing part is not shown in figure 9, only the second transmission housing part 15 is shown. When the park lock system 1 is assembled to the first transmission housing part, the second transmission housing part 15 may be positioned on it to close the transmission housing. The alignment of the park lock system 1 with the second transmission housing 15 may be achieved by means of an assembly tool (not shown) which positions and assembles the second transmission housing 15 to the first transmissions housing while keeping all transmission components in position.. Subsequently, the second transmission housing 15 may be assembled on top of the transmission and park lock system 1, wherein bolts 5'.18'19',20' may be received by the park lock system 1 to secure the park lock system 1 to the second transmission housing 15. For the purpose of clarity and a concise description, features are described herein as part of the same or separate embodiments, however, it will be appreciated that the scope of the invention may include embodiments having combinations of all or some of the features described. It may be understood that the embodiments shown have the same or similar components, apart from where they are described as being different.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

Many variants will be apparent to the person skilled in the art. All variants are understood to be comprised within the scope of the invention defined in the following claims.

## Claims

1. A park lock system (1) comprising
- a park lock pawl (2) that is adjustable between a park position in which the park lock pawl (2) is engaged with a park gear (24) and a non-park position in which the park lock pawl (2) is disengaged from the park gear (24);
- an actuation device (3) for actuating the park lock pawl (2) between the park position and the non-park position;
- a mounting bracket (4) that is configured for receiving the park lock pawl (2) and for receiving the actuation device (3) such that, when the park lock pawl (2) and the actuation device (3) are mounted to the mounting bracket (4), a pre-assembly unit (29) is provided for assembly into a transmission housing (15), wherein the mounting bracket (4) further is provided with connection elements (26) for connection to the transmission housing (15); wherein the mounting bracket (4) comprises at least a first bracket plate (11) and a second bracket plate (12) parallel to the first bracket plate (11), wherein the park lock pawl (2) is receivable between the first bracket plate (11) and the second bracket plate (12), wherein the mounting bracket (4) is arranged to receive a park shaft (5), to which the park lock pawl (2) and the actuation device (3) are mounted, wherein the park shaft (5) is receivable through a hole (13) in the first bracket plate (11) and a corresponding hole (14) in the second bracket plate (12), wherein the actuation device (3) is connectable to the park shaft (5) at an end of the park shaft (5) extending outwardly from the second bracket plate (12).

2. The park lock system according to claim 1, wherein the park shaft (5) is provided with a connecting element (26) for connection to the transmission housing (15).

3. The park lock system according to any of the preceding claims, wherein the mounting bracket (4) further is provided with at least one pin (19, 20) extending through holes (13, 14) in the first and the second bracket plate (11, 12), wherein the pin (19, 20) comprises a connecting element for connection to the transmission housing (15).

4. The park lock system according to any of the preceding claims, wherein the actuation device (3) comprises a shift fork (6) that is at one end (6a) engageable in a shift drum (23) and at another end(6b) is engageable to the park lock pawl (2) for adjusting the park lock pawl (2).

5. The park lock system according to claim 4, wherein the shift fork (6) is engageable to the park lock pawl (2) via a pull rod (8), over which a locking cone element (10) is movable, wherein the locking cone element (10) is engageable to the park lock pawl (2) for adjusting the park lock pawl (2).

6. The park lock system according to claim 5, wherein the pull rod (8) and the locking cone element (10) are receivable in a bushing (16), wherein the bushing (16) is connectable to the mounting bracket (4).

7. The park lock system according to any of the claims 4 - 6, wherein the mounting bracket (4) further comprises a guidance rod (18) for rotational locking of the shift fork (6).

8. The park lock system according to claim 7, wherein the guidance rod (18) is provided with a connecting element (26) for connection to the transmission housing (15).

9. Transmission comprising a park lock system according to any of the claims 1- 8.

10. Method for assembling a park lock system (1) : according to any of the claims 1 to 8 into a transmission housing (15), comprising - assembling a pre-assembly unit (29) of the park lock system by mounting the park lock pawl (2) and the actuation device (3) to the mounting bracket (4);
- assembling the pre-assembly unit (29) of the park lock system to the transmission assembled to one transmission housing part;
- closing the transmission housing (15) with another transmission housing part;
- securing the pre-assembly unit (29) of the park lock system to the transmission housing part from outside of the transmission housing (15).

## Patentansprüche

1. Parksperrsystem (1), umfassend
- eine Parksperrklinke (2), die zwischen einer Parkposition, in der die Parksperrklinke (2) mit einem Parkzahnrad (24) in Eingriff steht, und einer Nicht-Parkposition, in der die Parksperrklinke (2) von dem Parkzahnrad (24) gelöst ist, einstellbar ist;
- eine Betätigungsvorrichtung (3) zum Betätigen der Parksperrklinke (2) zwischen der Parkposition und der Nicht-Parkposition;
- einen Montagewinkel (4), der zur Aufnahme der Parksperrklinke (2) und zur Aufnahme der Betätigungsvorrichtung (3) ausgelegt ist, so dass bei der Montage der Parksperrklinke (2) und der Betätigungsvorrichtung (3) an dem Montagewinkel (4) eine Vormontageeinheit (29) zur Montage in ein Getriebegehäuse (15) vorgesehen ist, wobei der Montagewinkel (4) ferner mit Verbindungselementen (26) zur Verbindung mit dem Getriebegehäuse (15) versehen ist; wobei der Montagewinkel (4) wenigstens eine erste Winkelplatte (11) und eine zur ersten Winkelplatte (11) parallele zweite Winkelplatte (12) umfasst,
wobei die Parksperrklinke (2) zwischen der ersten Winkelplatte (11) und dem zweiten Montagewinkel (12) aufgenommen werden kann, wobei der Montagewinkel (4) angeordnet ist, um eine Parkwelle (5) aufzunehmen, an der die Parksperrklinke (2) und die Betätigungsvorrichtung (3) montiert sind, wobei die Parkwelle (5) durch ein Loch (13) in der ersten Auslegerplatte (11) und ein entsprechendes Loch (14) in der zweiten Winkelplatte (12) aufgenommen werden kann, wobei die Betätigungsvorrichtung (3) mit der Parkwelle (5) an einem Ende der Parkwelle (5), das sich von der zweiten Winkelplatte (12) nach außen erstreckt, verbunden werden kann.

2. Parksperrsystem nach Anspruch 1, wobei die Parkwelle (5) mit einem Verbindungselement (26) zur Verbindung mit dem Getriebegehäuse (15) versehen ist.

3. Parksperrsystem nach einem der vorhergehenden Ansprüche, wobei der Montagewinkel (4) ferner mit wenigstens einem Stift (19, 20) versehen ist, der sich durch Löcher (13, 14) in der ersten und der zweiten Winkelplatte (11, 12) erstreckt, wobei der Stift (19, 20) ein Verbindungselement zur Verbindung mit dem Getriebegehäuse (15) umfasst.

4. Parksperrsystem nach einem der vorhergehenden Ansprüche, wobei die Betätigungsvorrichtung (3) eine Schaltgabel (6) umfasst, die an einem Ende (6a) in eine Schalttrommel (23) in Eingriff gebracht werden kann und an einem anderen Ende (6b) mit der Parksperrklinke (2) zur Einstellung der Parksperrklinke (2) in Eingriff gebracht werden kann.

5. Parksperrsystem nach Anspruch 4, wobei die Schaltgabel (6) über eine Zugstange (8), über die ein Sperrkegelelement (10) bewegt werden kann, mit der Parksperrklinke (2) in Eingriff gebracht werden kann, wobei das Sperrkegelelement (10) mit der Parksperrklinke (2) zur Einstellung der Parksperrklinke (2) in Eingriff gebracht werden kann.

6. Parksperrsystem nach Anspruch 5, wobei die Zugstange (8) und das Sperrkegelelement (10) in einer Buchse (16) aufgenommen werden kann, wobei die Buchse (16) mit dem Montagewinkel (4) verbunden werden kann.

7. Parksperrsystem nach einem der Ansprüche 4 bis 6, wobei der Montagewinkel (4) ferner eine Führungsstange (18) zur Drehverriegelung der Schaltgabel (6) umfasst.

8. Parksperrsystem nach Anspruch 7, wobei die Führungsstange (18) mit einem Verbindungselement (26) zur Verbindung mit dem Getriebegehäuse (15) versehen ist.

9. Getriebe mit einem Parksperrsystem nach einem der Ansprüche 1 bis 8.

10. Verfahren zum Zusammenbau eines Parksperrsystems (1) nach einem der Ansprüche 1 bis 8 in ein Getriebegehäuse (15), umfassend
- Zusammenbau einer Vormontageeinheit (29) des Parksperrsystems durch Montage der Parksperrklinke (2) und der Betätigungsvorrichtung (3) an dem Montagewinkel (4);
- Zusammenbau der Vormontageeinheit (29) des Parksperrsystems an das zu einem Getriebegehäuseteil montierte Getriebe;
- Schließen des Getriebegehäuses (15) mit einem anderen Getriebegehäuseteil;
- Befestigen der Vormontageeinheit (29) des Parksperrsystems an dem Getriebegehäuseteil von außerhalb des Getriebegehäuses (15).

## Revendications

1. Système de verrouillage de stationnement (1) comprenant
- un cliquet de verrouillage de stationnement (2) qui est réglable entre une position de stationnement dans laquelle le cliquet de verrouillage de stationnement (2) est en prise avec un engrenage de stationnement (24), et une position de non stationnement dans laquelle le cliquet de verrouillage de stationnement (2) est hors de prise avec l'engrenage de stationnement (24) ;
- un dispositif d'actionnement (3) destiné à actionner le cliquet de verrouillage de stationnement (2) entre la position de stationnement et la position de non stationnement ;
- un support de montage (4) qui est configuré pour recevoir le cliquet de verrouillage de stationnement (2), et pour recevoir le dispositif d'actionnement (3) de telle sorte que, lorsque le cliquet de verrouillage de stationnement (2) et le dispositif d'actionnement (3) sont montés sur le support de montage (4), une unité de pré-assemblage (29) soit fournie pour être assemblée dans un logement de transmission (15),
dans lequel le support de montage (4) est doté en outre d'éléments de connexion (26) destinés à une connexion avec le logement de transmission (15) ;
dans lequel le support de montage (4) comprend au moins une première plaque de support (11), et une seconde plaque de support (12) parallèle à la première plaque de support (11),
dans lequel le cliquet de verrouillage de stationnement (2) peut être reçu entre la première plaque de support (11) et la seconde plaque de support (12),
dans lequel le support de montage (4) est agencé pour recevoir un arbre de stationnement (5), sur lequel sont montés le cliquet de verrouillage de stationnement (2) et le dispositif d'actionnement (3),
dans lequel l'arbre de stationnement (5) peut être reçu dans un trou (13) dans la première plaque de support (11), et dans un trou correspondant (14) dans la seconde plaque de support (12),
dans lequel le dispositif d'actionnement (3) peut être connecté à l'arbre de stationnement (5) au niveau d'une extrémité de l'arbre de stationnement (5) s'étendant vers l'extérieur à partir de la seconde plaque de support (12).

2. Système de verrouillage de stationnement selon la revendication 1, dans lequel l'arbre de stationnement (5) est doté d'un élément de connexion (26) destiné à une connexion avec le logement de transmission (15).

3. Système de verrouillage de stationnement selon l'une quelconque des revendications précédentes, dans lequel le support de montage (4) est doté en outre d'une broche (19, 20) au moins qui s'étend à travers les trous (13, 14) dans les première et seconde plaques de support (11, 12), dans lequel la broche (19, 20) comprend un élément de connexion destiné à une connexion avec le logement de transmission (15).

4. Système de verrouillage de stationnement selon l'une quelconque des revendications précédentes, dans lequel le dispositif d'actionnement (3) comprend une fourchette de boîte (6) qui peut venir en prise au niveau d'une extrémité (6a) avec un tambour de boîte (23), et qui peut venir en prise au niveau d'une autre extrémité (6b) avec le cliquet de verrouillage de stationnement (2) afin de régler le cliquet de verrouillage de stationnement (2).

5. Système de verrouillage de stationnement selon la revendication 4, dans lequel la fourchette de boîte (6) peut venir en prise avec le cliquet de verrouillage de stationnement (2) par l'intermédiaire d'une tige de traction (8), sur laquelle peut se déplacer un élément de cône de verrouillage (10), dans lequel l'élément de cône de verrouillage (10) peut venir en prise avec le cliquet de verrouillage de stationnement (2) afin de régler le cliquet de verrouillage de stationnement (2).

6. Système de verrouillage de stationnement selon la revendication 5, dans lequel la tige de traction (8) et l'élément de cône de verrouillage (10) peuvent être reçus dans une bague (16), où la bague (16) peut être connectée au support de montage (4).

7. Système de verrouillage de stationnement selon l'une quelconque des revendications 4 à 6, dans lequel le support de montage (4) comprend en outre une tige de guidage (18) destinée à bloquer en rotation la fourchette de boîte (6).

8. Système de verrouillage de stationnement selon la revendication 7, dans lequel la tige de guidage (18) est dotée d'un élément de connexion (26) destiné à une connexion avec le logement de transmission (15).

9. Transmission comprenant un système de verrouillage de stationnement selon l'une quelconque des revendications 1 à 8.

10. Procédé destiné d'assemblage d'un système de verrouillage de stationnement (1) selon l'une quelconque des revendications 1 à 8, dans un logement de transmission (15), comprenant:
- l'assemblage d'une unité de pré-assemblage (29) du système de verrouillage de stationnement en montant le cliquet de verrouillage de stationnement (2) et le dispositif d'actionnement (3) sur le support de montage (4) ;
- l'assemblage de l'unité de pré-assemblage (29) du système de verrouillage de stationnement sur la transmission assemblée à une partie du logement de transmission ;
- la fermeture du logement de transmission (15) avec une autre partie du logement de transmission ;
- la fixation de l'unité de pré-assemblage (29) du système de verrouillage de stationnement sur la partie du logement de transmission à partir de l'extérieur du logement de transmission (15).
